Europäisches Patentamt

European Patent Office

Office européen des brevets

(19)

(11) Numéro de publication : **0 035 435**
**B1**

(12) FASCICULE DE BREVET EUROPÉEN

(45) Date de publication du fascicule du brevet :
28.12.83

(51) Int. Cl.³ : **A 01 F 25/20**

(21) Numéro de dépôt : **81400276.2**

(22) Date de dépôt : **20.02.81**

(54) Véhicule pour le désilage par découpage, l'extraction et le transport de blocs de fourrage.

(30) Priorité : **28.02.80 FR 8004460**

(43) Date de publication de la demande :
**09.09.81 Bulletin 81/36**

(45) Mention de la délivrance du brevet :
**28.12.83 Bulletin 83/52**

(84) Etats contractants désignés :
**AT BE CH DE GB IT LI LU NL SE**

(56) Documents cités :
**EP-A- 0 014 153**
**EP-A- 0 014 154**
**EP-A- 0 015 823**
**EP-A- 0 026 143**

(73) Titulaire : **S.A. AUDUREAU Société dite:**
**La Copechagniere**
**F-85260 L'Herbergement (Vendée) (FR)**

(72) Inventeur : **Audureau, Bernard**
**Route de Nantes**
**F-85620 Rocheserviere (Vendée) (FR)**

(74) Mandataire : **Ducas, Michel Louis Marie et al**
**Cabinet Boettcher 23, rue La Boétie**
**F-75008 Paris (FR)**

Jouve, 18, rue St-Denis, 75001 Paris, France

# Véhicule pour le désilage par découpage, l'extraction et le transport de blocs de fourrage

L'invention concerne un véhicule automoteur ou remorqué pour le désilage par découpage, l'extraction, le transport de blocs de fourrage à extraire d'un silo. Elle concerne également un tel dispositif utilisable également à la distribution du fourrage ainsi transporté.

On connaît plusieurs dispositifs comportant une fourche horizontale qu'on enfonce dans le fourrage à extraire en bloc et comportant des moyens de découpage d'une saignée au droit du contour de la fourche. De telles unités de découpage sont elles-mêmes de différents types, par exemple à couteau vibrant guidé circulairement, comme dans les brevets français nos 2 124 224 et 2 187 242, ou à couteau vibrant circulant sur un chemin de guidage comme dans le brevet français no 2 218 046, ou encore à chaîne de sciage, comme dans les brevets français·nos 2 170 276 et 2 323 608.

Ce dernier brevet cité comporte une fourche pivotante pouvant être verrouillée en position d'attaque du fourrage ensilé.

Le bloc de fourrage découpé par des unités de découpage portées par des tracteurs ou chariots munis du dispositif des types rappelés précédemment est destiné à être transporté soit pour nourrir des bêtes au pré, soit, le plus couramment, pour nourrir des bêtes élevées en batterie. Le bloc découpé doit, dans ce cas, être amené dans une allée centrale, d'où il faut alors distribuer le fourrage, qui le compose, dans les mangeoires des animaux. Bien que ces mangeoires longents l'allée, il faut une intervention manuelle pour défaire le bloc et en répartir le fourrage. D'autre part, il faut, avec les appareils connus des types précités, faire autant de voyages entre silo et lieu d'élevage qu'on désire transporter de blocs de fourrage, ce qui arrive de plus en plus en raison des dimensions de plus en plus grandes des étables et du nombre de bêtes qui y sont élevées.

On connaît des machines ou des véhicules qui sont conçus pour découper du fourrage ensilé, le recevoir dans un volume correspondant, le transporter et le distribuer ensuite. Ces moyens sont décrits dans des demandes de brevet européen qui ont été publiées postérieurement à la date de priorité de la présente demande.

La demande de brevet européen no 14 153 décrit une benne à une paroi latérale portée par un bras transversal à cette benne. Cette paroi est pourvue de dents le long de son bord inférieur de sorte qu'elle agit comme une fourche ou une pelle râcleuse pour arracher de la matière ensilée et la pousser dans la benne en la tassant plus ou moins. Le fond de cette benne est équipé d'un transporteur associé à sa sortie à un appareil déchiqueteur. Le volume prélevé n'est pas connu avec exactitude.

La demande de brevet européen no 14 154 concerne un appareil analogue au précédent avec la particularité supplémentaire que l'ensemble est supporté par des bras longitudinaux munis de roues qui peuvent osciller en sens vertical de sorte que le niveau de la benne au-dessus du sol est modifiable en fonction de la hateur de la matière à prélever. Mais le volume prélevé n'est pas mieux connu que dans le cas de la demande précédente.

La demande de brevet européen no 15 823 décrit une machine dans laquelle deux vis d'Archimède sont disposées transversalement à un volume récepteur destiné à contenir le fourrage désilé par ces vis. Ce volume est limité par un fond équipé d'un transporteur associé à sa sortie à un appareil déchiqueteur. Les vis tassent plus ou moins le fourrage dans le volume récepteur. Le volume prélevé n'est pas non plus connu avec exactitude.

La demande de brevet européen no 26 143 a pour objet une benne à fond équipé d'un transporteur associé à sa sortie à un appareil déchiqueteur. Une paroi latérale de cette benne a une large ouverture devant laquelle est installé un dispositif de découpage d'un bloc de fourrage ensilé comprenant une fourche mobile entre une position horizontale (pour le découpage d'un bloc) et une position verticale (pour faire basculer dans la benne le bloc découpé). Le volume prélevé est connu mais, de par sa conception, une telle machine n'est pas capable de transporter plus de deux blocs à la fois.

Le but principal de l'invention est de permettre, par des moyens très simples, de désiler et transporter plus de deux blocs de fourrage au cours d'un seul voyage du tracteur ou chariot entre silo et lieu d'élevage, c'est-à-dire de doubler ou tripler au moins la capacité de désilage et de transport à chaque voyage par rapport aux machines évoquées ci-dessus. Un autre but de l'invention est de permettre la distribution directe dans les mangeoires du fourrage en le répartissant régulièrement plus ou moins dilacéré.

Le but principal est atteint par un véhicule du type rappelé au début et comportant à l'avant, lors du désilage, une fourche réglable en hauteur dont les dents sont dirigées horizontalement vers l'extérieur dans la direction de déplacement du véhicule et surmontée par une unité de découpage capable de pratiquer dans le fourrage ensilé une saignée sensiblement verticale selon un contour correspondant sensiblement au contour frontal et latéral de la fourche, grâce au fait qu'il comporte, selon l'invention :

— en arrière de la fourche, placée en position de désilage, un support à au moins deux travées successives dans le sens longitudinal pour au moins deux blocs découpés, et

— un moyen commandable de recul et d'élévation de la fourche au-dessus du support assurant séparément ou simultanément un recul d'une longueur correspondant à au moins deux blocs et une élévation d'une hauteur correspondant à au moins un bloc.

Selon un mode de réalisation préféré de l'invention, le moyen, unique, commandable de recul et d'élévation de la fourche est un bras télescopique oscillant autour d'un axe horizontal situé sur le véhicule du côté opposé à la fourche, lorsque celle-ci est en position de désilage.

Il est conforme à l'invention que l'ensemble de l'unité de découpage soit orientable autour d'un axe parallèle à l'axe d'oscillation du bras télescopique et porté par l'extrémité libre de ce bras.

Par les moyens qui ont été décrits jusqu'ici, on voit qu'il est possible de transporter, pour une longueur de support de deux travées, au moins deux blocs. En reculant la fourche chargée sur la première travée qui jouxte sa position d'attaque et en l'inclinant légèrement puis en la reculant sur la seconde travée on dépose un premier bloc sur la première travée, après quoi on dégage la fourche en la faisant passer par-dessus le premier bloc pour la ramener en position d'attaque, dans laquelle elle peut prendre un deuxième bloc. En reculant à nouveau la fourche, on repousse le premier bloc dans la deuxième travée, si bien qu'on peut transporter deux blocs.

Pour faciliter le dépôt du premier bloc sur la première travée de la façon exposée, il est avantageux que les dents de la fourche fassent saillie vers le bas par rapport à sa branche commune et que le support comporte une alternance de rainures et de nervures longitudinales, les rainures étant en concordance de forme avec les dents, qui peuvent y coulisser sans faire saillie au-dessus des nervures, lorsque la fourche repose sur le support.

Le second but de l'invention est atteint par le fait que, pour la distribution du fourrage, le support pour les blocs découpés est prolongé, du côté opposé à la fourche, par un transporteur à sens de déplacement transversal à celui du véhicule. Accessoirement le transporteur constitue une travée supplémentaire sur laquelle on peut pousser avec le dos de la fourche le premier bloc déposé sur la première travée, d'où possibilité de transporter trois blocs et même quatre, dont l'un par simple basculement de la fourche au-dessus de l'une des travées libres et un autre sur la fourche maintenue en position d'attaque. Si le support est à trois travées au lieu de deux, on pourra alors transporter jusqu'à cinq blocs.

Quel que soit le nombre de travées, le transporteur ayant reçu un bloc par poussée de la fourche reculée et ayant distribué tout ce bloc pourra être réapprovisionné par une nouvelle poussée en arrière de la fourche sur les blocs restant sur le support.

Il est avantageux que le transporteur comprenne des moyens d'arrachement et qu'il soit prévu des moyens d'immobilisation du bloc découpé contre le sens de l'arrachement.

Pratiquement, il sera commode que le transporteur soit un transporteur à raclettes et/ou palettes et avantageux que les moyens d'immobilisation soient constitués par un organe démêleur et/ou déchiqueteur disposé au-dessus du transporteur au voisinage de son extrémité de déchargement.

D'autres caractéristiques et avantages de l'invention ressortiront de la description, qui sera donnée ci-après uniquement à titre d'exemple, d'un mode de réalisation de l'invention. On se reportera à cet effet aux dessins annexés dans lesquels :

la figure 1   est une vue latérale d'une remorque équipée selon l'invention,

la figure 2   est une vue en coupe selon II de la figure 1,

la figure 3   est une vue en coupe selon III de la figure 1,

la figure 4   est une vue en perspective partielle de la fourche vue de dos.

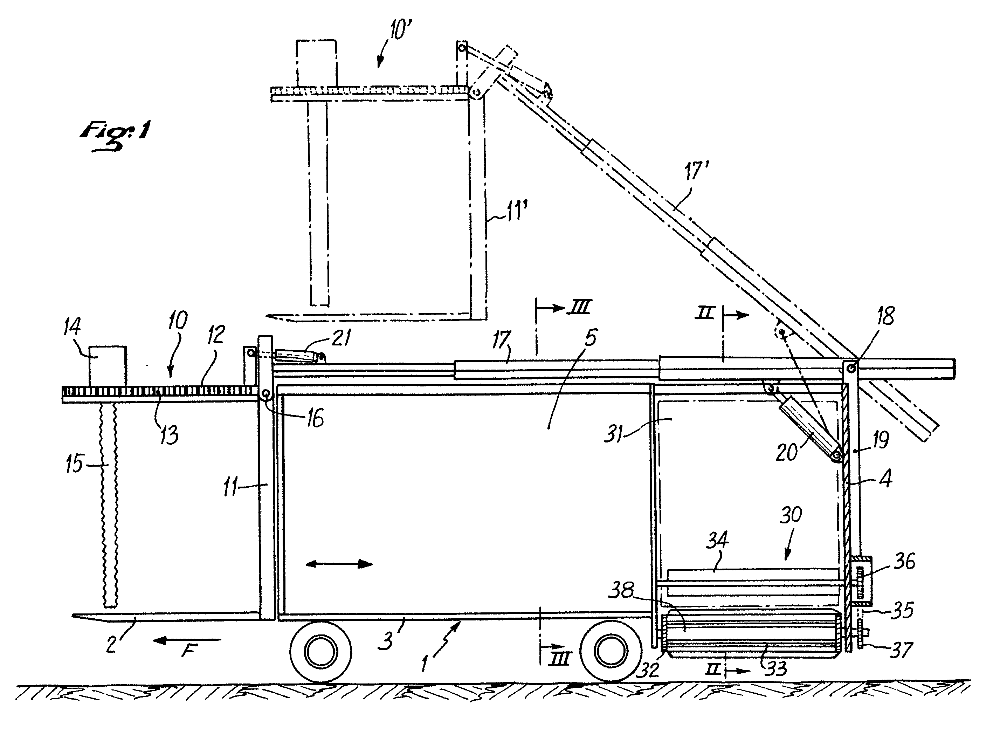

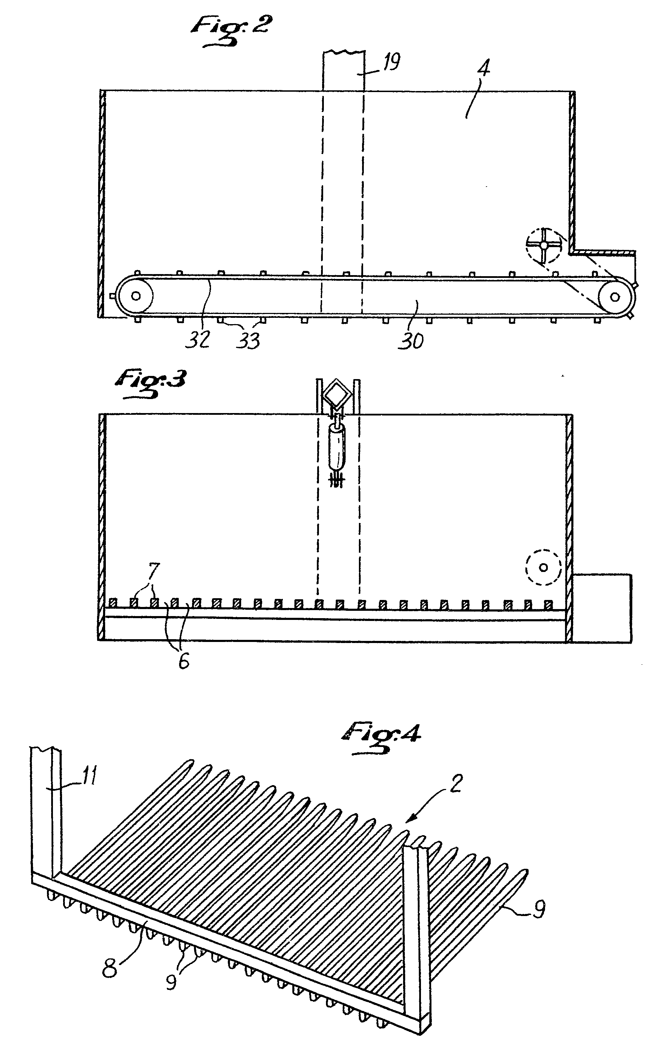

Une remorque 1 a un châssis d'une longueur utile de trois travées, la longueur d'une travée étant prise comme convenant au rangement d'un bloc de fourrage découpé comme il sera exposé. Dans l'exposé qui suit, les notions d'avant et d'arrière ne se réfèreront pas au sens de remorquage de la remorque 1, mais au sens d'attaque de la fourche 2 portée à l'arrière du véhicule. Les deux travées avant sont constituées par un simple plancher 3 pouvant être plat ou nervuré, comme représenté à la figure 3. La travée arrière reçoit un transporteur transversal 30. La remorque a une paroi de fond 4 et des parois latérales 5, mais sa section est entièrement dégagée aussi bien au-dessus du plancher 3 qu'à l'avant, c'est-à-dire du côté de la fourche 2.

La fourche 2 fait partie d'un ensemble de découpage 10 comportant un cadre 11 à la base duquel la fourche proprement dite 2 est fixée transversalement et en haut duquel est fixé un chemin de roulement 12 à crémaillère se développant en U parallèlement à la fourche 2 à partir de la partie supérieure du cadre 11. Sur le chemin de roulement en U peut se déplacer, grâce à la crémaillère 13, un chariot 14 moteur ou mû comportant un pignon d'engrenage sur la crémaillère 13. Ce chariot 14 porte, comme il est connu en soi, un couteau vertical 15 à lame vibrante pour le découpage du fourrage selon le trajet défini par le chemin de roulement 12 et qui correspond, par construction, au profil du contour de la fourche 2.

L'ensemble de découpage 10 est porté oscillant autour d'un axe transversal 16 à l'extrémité libre d'un bras télescopique 17 oscillant autour d'un axe de pivotement transversal 18 porté par un support 19 se dressant contre la paroi 4 et dont la hauteur par rapport au plancher 3 correspond sensiblement à la hauteur utile du cadre 11 entre fourche 2 et chemin de roulement 12. Le bras télescopique 17 est commandable en pivotement autour de l'axe 18 grâce à un vérin 20. A l'extrémité libre de ce bras oscillant 17, l'ensemble de découpage 10 est réglable en inclinaison par rapport audit bras grâce à un vérin 21. La longueur du bras en élongation maximale est telle que le cadre 11 vienne en avant de la première travée, dans la position représentée en trait plein à la figure 1. Sa longueur en rétraction complète est telle que le cadre 11 vienne jouxter le transporteur 30. Autrement dit, la variation possible de longueur du bras correspond sensiblement aux deux travées de plancher 3. Son angle de levage permet à l'ensemble de découpage de passer au-dessus d'un bloc déposé sur le plancher 3 dans la première travée.

Si le plancher comporte, comme à la figure 3, des rainures 6 et/ou nervures 7 longitudinales, il est avantageux que, comme représenté à la figure 4, les dents 9 fassent saillie vers le bas par rapport à sa branche commune 8.

Selon un perfectionnement avantageux de l'invention, le plancher 3 est prolongé à l'arrière par un convoyeur 30 à chaînes 32 sans fin et à raclettes 33 à sens de déplacement transversal par rapport au sens de déplacement du véhicule. De cette façon la matière d'un bloc 31 est arrachée par les raclettes 33 et peut donc être déversée par le convoyeur 30 dans les mangeoires pendant que le véhicule se déplace dans l'allée de service. Pour que le bloc entier ne soit pas entraîné, il suffit que les faces latérales du bâti comportent des barres ou parois d'arrêt. Le convoyeur peut être à un seul ou à deux sens de marche. Il est possible d'améliorer l'effet d'arrachement en disposant, au lieu d'une barre d'arrêt, un tourniquet 34 démêleur et/ou déchiqueteur disposé au-dessus et près du point de déversement du convoyeur 30 transversalement au sens de déplacement de celui-ci. Ce tourniquet 34 peut être lié par chaîne 35 et pignons 36, 37 avec le tambour moteur 38 du convoyeur 30. On peut encore améliorer l'effet d'arrachement en prévoyant des raclettes 33 présentant des dents dirigées vers le bloc 31.

La mise en œuvre de l'invention n'est pas liée au type de l'unité de découpage décrit. Elle peut se faire avec un autre type d'unité de découpage, comme ceux qui sont mentionnés au début.

## Revendications

1. Véhicule pour le désilage par découpage, l'extraction, le transport de blocs de fourrage à extraire d'un silo comportant à l'avant lors du désilage une fourche (2) réglable en hauteur dont les dents sont dirigées horizontalement vers l'extérieur dans la direction de déplacement du véhicule (1) et surmontée par une unité de découpage (10) capable de pratiquer dans le fourrage ensilé une saignée sensiblement verticale selon un contour correspondant sensiblement au contour frontal et latéral de la fourche, caractérisé en ce qu'il comporte :

— en arrière de la fourche (2), lorsque celle-ci est placée en position de désilage, un support (3) à au moins deux travées successives dans le sens longitudinal pour au moins deux blocs découpés, et

— un moyen commandable de recul et d'élévation de la fourche (2) au-dessus du support (3) assurant séparément ou simultanément un recul d'une longueur correspondant à au moins deux blocs et une élévation d'une hauteur correspondant à au moins un bloc.

2. Véhicule selon la revendication 1, caractérisé en ce que le moyen, unique, commandable de recul et d'élévation de la fourche (2) est un bras télescopique (17) oscillant autour d'un axe horizontal (18) situé sur le véhicule (1) du côté opposé à la fourche (2), lorsque celle-ci est en position de désilage.

3. Véhicule selon la revendication 2, caractérisé en ce que l'ensemble de découpage (10) consitué par la fourche (2) et l'unité de découpage (12-15) est orientable autour d'un axe (16) parallèle à l'axe d'oscillation (18) du bras télescopique (17) et porté par l'extrémité libre de ce bras (17).

4. Véhicule selon la revendication 1, caractérisé en ce que les dents (9) de la fourche (2) font saillie vers le bas par rapport à sa branche commune (8) et le support (3) comporte une alternance de rainures (6) et de nervures (7) longitudinales, les rainures (6) étant en concordance de forme avec les dents (9), qui peuvent y coulisser sans faire saillie au-dessus des nervures (7), lorsque la fourche (2) repose sur le support (3).

5. Véhicule selon la revendication 1, caractérisé en ce que, pour la distribution du fourrage, le support (3) pour les blocs découpés est prolongé, du côté opposé à la fourche, par un transporteur (30) à sens de déplacement transversal à celui du véhicule (1).

6. Véhicule selon la revendication 5, caractérisé en ce que le transporteur (30) comprend des moyens d'arrachement (33) et il est prévu des moyens d'immobilisation (34) du bloc découpé (31) contre le sens de l'arrachement.

7. Véhicule selon la revendication 6, caractérisé en ce que le transporteur (30) est un transporteur à raclettes et/ou palettes, constituant les moyens d'arrachement (33).

8. Véhicule selon la revendication 6, caractérisé en ce que les moyens d'immobilisation du bloc découpé sont constitués par un organe démêleur et/ou déchiqueteur (34) disposé au-dessus du transporteur (30) au voisinage de son extrémité de déchargement.

9. Véhicule selon la revendication 7, caractérisé en ce que les raclettes et/ou palettes (33) présentent des dents.

## Claims

1. A vehicle for unloading a silo by cutting out blocks of the fodder which is to be withdrawn from the silo, and withdrawing and transporting them, the said vehicle having at the front at the time of the unloading a fork (2) which is adjustable in height and the tines of which are directed horizontally towards the outside in the direction of movement of the vehicle (1) and which is surmounted by a cutter unit (10) capable of making in the ensiled fodder a substantially vertical cut along a contour which corresponds substantially with the frontal and lateral contour of the fork, characterized in that it includes :

— at the rear of the fork (2) when the latter is located in the position for unloading the silo, a support (3) having at least two successive bays in the longitudinal direction for at least two blocks which have been cut out, and

— controllable means for withdrawal and raising of the fork (2) above the support (3) to ensure separately or simultaneously a withdrawal by a length corresponding with at least two blocks and raising by a height corresponding with at least one block.

2. A vehicle as in Claim 1, characterized in that the sole controllable means for withdrawal and raising of the fork (2) is a telescopic arm (17) which swings about a horizontal axis (18) located on the vehicle (1) at the side opposite from the fork (2) when the latter is in the position for unloading the silo.

3. A vehicle as in Claim 2, characterized in that the cutter assembly (10) consisting of the fork (2) and the cutter unit (12-15) can swivel about an axis (16) parallel with the axis of swing (18) of the telescopic arm (17) and carried by the free end of this arm (17).

4. A vehicle as in Claim 1, characterized in that the tines (9) of the fork (2) project downwards with respect to its common arm (8) and the support (3) has an alternation of longitudinal grooves (6) and ribs (7), the grooves (6) concording in shape with the tines (9) which can slide in them without projecting above the ribs (7), when the fork (2) is resting on the support (3).

5. A vehicle as in Claim 1, characterized in that for distribution of the fodder the support (3) for the cut-out blocks is prolonged at the side opposite from the fork, by a conveyor (30) having a direction of movement which is transverse to that of the vehicle (1).

6. A vehicle as in Claim 5, characterized in that the conveyor (30) comprises tearing means (33) and it is provided with means (34) of holding the cut-out block (31) immovable against the direction of the tearing.

7. A vehicle as in Claim 6, characterized in that the conveyor (30) is a conveyor having scrapers and/or blades which form the tearing means (33).

8. A vehicle as in Claim 6, characterized in that the means of holding the cut-out block immovable consist of a combing and/or shredding member (34) arranged above the conveyor (30) in the vicinity of its discharge end.

9. A vehicle as in Claim 7, characterized in that the scrapers and/or blades (33) exhibit teeth.

**Ansprüche**

1. Fahrzeug zur Siloentleerung mittels Ausschneiden, Entnahme und Abtransport von Futterblöcken aus einem Silo, mit einer bei der Siloentleerung vorne liegenden, in der Höhe einstellbaren Gabel (2), deren Zähne in Fahrtrichtung des Fahrzeugs (1) horizontal nach aussen gerichtet sind und über welcher ein Schneidaggregat befestigt ist, das aus dem im Silo gespeicherten Futter einen im wesentlichen vertikalen Zapfen bildet, dessen Umfang im wesentlichen dem vorderen und seitlichen Umfang der Gabel entspricht, dadurch gekennzeichnet,

— dass hinter der Gabel (2), wenn diese in Siloentleerungsstellung angeordnet ist, eine Halterung (3) angeordnet ist, die mindestens zwei in Längsrichtung aufeinanderfolgende Jochräume für mindestens zwei abgeschnittene Futterblöcke aufweist,

— und dass eine Einrichtung zur Steuerung des Rücklaufs und des Anhebens der Gabel (2) über die Halterung (3) vorhanden ist, welche getrennt oder gleichzeitig einen Rücklauf entsprechend einer Länge von zumindest zwei Blöcken und ein Anheben um eine Höhe, entsprechend zumindest einem Block, gestattet.

2. Fahrzeug nach Anspruch 1, dadurch gekennzeichnet, dass die — alleinige — Einrichtung zur Steuerung des Rücklaufs und des Anhebens der Gabel (2) ein ausziehbarer Arm (17) ist, der um eine horizontale Achse (18) schwenkbar ist, welche am Fahrzeug (1) an der der Gabel (2) entgegengesetzten Seite liegt, wenn sich die Gabel in der Siloentleerungsstellung befindet.

3. Fahrzeug nach Anspruch 2, dadurch gekennzeichnet, dass das Schneidaggregat (10), welches durch die Gabel (2) und die Schneidvorrichtung (12 bis 15) gebildet wird, um eine Achse (16) ausrichtbar ist, die parallel zur Schwenkachse (18) des ausziehbaren Arms (17) liegt und die vom freien Ende dieses Arms (17) gehalten wird.

4. Fahrzeug nach Anspruch 1, dadurch gekennzeichnet, dass die Zähne (9) der Gabel (2) gegenüber ihrem gemeinsamen Abschnitt (8) nach unten vorstehen und dass die Halterung (3) abwechselnd Längsnuten (6) und Längsrippen (7) aufweist, wobei die Längsnuten in ihrer Form mit den Zähnen (9) übereinstimmen, die in den Längsnuten gleiten können, ohne über die Längsrippen (7) hinaus vorzustehen, wenn die Gabel (2) auf der Halterung (3) liegt.

5. Fahrzeug nach Anspruch 1, dadurch gekennzeichnet, dass zur Verteilung des Futters die Halterung (3) für die ausgeschnittenen Blöcke an ihrer der Gabel entgegengesetzten Seite durch einen Förderer (30) verlängert ist, dessen Förderrichtung quer zur Bewegungsrichtung des Fahrzeugs (1) liegt.

6. Fahrzeug nach Anspruch 5, dadurch gekennzeichnet, dass der Förderer (30) eine Abziehvorrichtung (33) aufweist und dass eine Einrichtung (34) zum Stillsetzen des abgeschnittenen Blocks (31) gegenüber der Abziehrichtung vorhanden ist.

7. Fahrzeug nach Anspruch 6, dadurch gekennzeichnet, dass der Förderer (30) ein Schrapper- und/oder Palettenförderer ist, wobei der Schrapper bzw. die Paletten die Abziehvorrichtung (33) bilden.

8. Fahrzeug nach Anspruch 6, dadurch gekennzeichnet, dass die Einrichtung zum Stillsetzen des abgeschnittenen Blocks aus einem Auflockerungselement und/oder Zerstückelungselement (34) besteht, das oberhalb des Förderers (30) in der Nachbarschaft seines Abgabeendes angeordnet ist.

9. Fahrzeug nach Anspruch 7, dadurch gekennzeichnet, dass die Schrapper und/oder Paletten (33) Zähne aufweisen.

*Fig:1*

0 035 435

0 035 435

*Fig. 2*

*Fig. 3*

*Fig. 4*